# EUROPEAN PATENT APPLICATION

(11) **EP 3 357 658 A1**
(43) Date of publication of application: **08.08.2018**
(21) Application number: 16851829.8
(22) Date of filing: 30.09.2016
(51) Int. Cl.: B29C 33/02, B29C 35/02

(54) **PNEUMATIC TIRE AND METHOD FOR MANUFACTURING SAME**

(30) Priority: 30.09.2015 JP 2015194229
(71) Applicant: The Yokohama Rubber Co., Ltd., Minato-ku Tokyo 105-8685 (JP)
(72) Inventor: KISHIHATA, Kazuaki, Hiratsuka-shi Kanagawa 254-8601 (JP)
(74) Representative: Dilg, Haeusler, Schindelmann Patentanwaltsgesellschaft mbH
(86) International application number: PCT/JP2016/078976
(87) International publication number: WO 2017/057660

(57) **Abstract**

Provided are a pneumatic tire with improved air dispersibility in a reinforcing layer including steel cords during vulcanization and with effectively suppressed blistering, and a method of manufacturing the same. In the pneumatic tire according to the present invention including a reinforcing layer (10) including a plurality of aligned steel cords (11) coated with coating rubber (12), at least one thread (13) for extending in a longitudinal direction of the steel cords (11) is disposed between the steel cords (11) in the coating rubber (12).

## Description

### Technical Field

The present invention relates to a pneumatic tire including a reinforcing layer obtained by coating a plurality of aligned steel cords with coating rubber, and a method of manufacturing the same, and more particularly, to a pneumatic tire with improved air dispersibility in a reinforcing layer including steel cords during vulcanization and with effectively suppressed blistering, and a method of manufacturing the same.

### Background Art

A vulcanization defect known as blistering can occur when a pneumatic tire is vulcanized. Blistering is a defect in which moisture and residual air contained in rubber, as well as residual air present at steps formed at the end portions of tire components when the tire is being molded, collect at localized areas during vulcanization, producing air pockets that do not disperse entirely during vulcanization, but remain present in the tire in the form of blisters. The moisture and residual air contained in the rubber produce countless air pockets during the initial stages of vulcanization, most of which are microdispersed and eliminated during vulcanization. However, air pockets may be concentrated at areas of low pressure during microdispersion, and re-expand once vulcanization is complete to form blisters.

To suppress blistering, the tire components are compressed by a stitcher during molding in order to promote dispersion of air, with air discharged via vent holes provided in the inner faces of a die during vulcanization; however, these measures alone are not capable of sufficiently removing residual air within the tire.

In contrast, it has been proposed, on the basis of air bubbles easily form between the carcass layer and adjacent members, to dispose air-absorbing organic fiber cords not coated with rubber on at least one surface of the carcass layer so that the organic fiber cords absorb residual air between the carcass layer and adjacent members, preventing the formation of air bubbles during vulcanization (for example, see Patent Document 1).

However, while it is possible, as described above, to absorb residual air between the carcass layer and adjacent members by disposing air-absorbing organic fiber cords not coated with rubber on at least one surface of the carcass layer, it is not always possible to effectively suppress blistering thereby. In particular, in a case of a reinforcing layer such as a carcass layer including steel cords, residual air within the steel cords cannot be sufficiently dispersed, and air bubbles are readily formed, with organic fiber cords disposed on the surface of the reinforcing layer. In a case where air-absorbing organic fiber cords not coated with rubber are disposed on the surface of a reinforcing layer such as a carcass layer, the organic fiber cords may be removed or misaligned in the tire molding process.

### Citation List

### Patent Literature

Patent Document 1: WO 2013/035555

### Summary of Invention

### Technical Problem

An object of the present invention is to provide a pneumatic tire with improved air dispersibility in a reinforcing layer including steel cords during vulcanization and with effectively suppressed blistering, and a method of manufacturing the same.

### Solution to Problem

To achieve the object described above, a pneumatic tire according to the present invention includes a reinforcing layer including a plurality of aligned steel cords coated with coating rubber, and at least one thread for extending in a longitudinal direction of the steel cords is disposed between the plurality of aligned steel cords in the coating rubber.

To achieve the object described above, a method of manufacturing a pneumatic tire according to the present invention includes: inserting at least one thread between a plurality of aligned steel cords to extend in a longitudinal direction of the plurality of aligned steel cords, in rolling the plurality of aligned steel cords along with coating rubber between a pair of rollers, to form a reinforcing layer including the plurality of aligned steel cords and the at least one thread; then forming a green tire including the reinforcing layer; and vulcanizing the green tire.

To achieve the object described above, another method of manufacturing a pneumatic tire according to the present invention includes: inserting at least one thread between a plurality of aligned steel cords to extend in a longitudinal direction of the plurality of aligned steel cords, in passing the plurality of aligned steel cords along with coating rubber through a die, to form a reinforcing layer including the plurality of aligned steel cords and the at least one thread; then forming a green tire including the reinforcing layer; and vulcanizing the green tire.

### Advantageous Effects of Invention

The present invention provides a pneumatic tire including a reinforcing layer including a plurality of aligned steel cords, at least one thread is disposed between the steel cords in the coating rubber, and allowing residual air within the steel cords to be effectively dispersed by the thread embedded in the reinforcing layer. Accordingly, air dispersibility during vulcanization of the reinforcing layer including steel cords is improved, and blistering is effectively prevented. Moreover, when disposing the thread between the steel cords in the coating rubber, the thread will not be removed or misaligned during the tire forming process, and thus the tire forming process is facilitated.

In the present invention, the thread can be constituted by a synthetic fiber or a natural fiber. The tensile strength of the thread may be preferably 100 N or less. As the thread is intended to improve air dispersibility and is not a reinforcing member, limiting the maximum tensile strength allows effects upon the behavior of the reinforcing layer to be minimized.

To manufacture the pneumatic tire according to the present invention, in one method, a reinforcing layer including steel cords and threads can be formed, by rolling a plurality of aligned steel cords along with the coating rubber between a pair of rollers, with at least one thread inserted between the steel cords to extend in the longitudinal direction of the steel cords. In another method, a reinforcing layer including steel cords and threads can be formed by passing the plurality of aligned steel cords along with the coating rubber through a die, with at least one thread inserted between the steel cords to extend in the longitudinal direction of the steel cords. Subsequently, a green tire including the reinforcing layer as described above may be formed, and the green tire may be vulcanized.

### Brief Description of Drawings

FIG. 1 is a meridian half cross-sectional view illustrating the pneumatic tire according to an embodiment of the present invention.
FIG. 2 is a plan view of a reinforcing layer to be used in the pneumatic tire according to the present invention.
FIG. 3 is a cross-sectional view of the reinforcing layer of FIG. 2.
FIG. 4 is a perspective view of a rolling apparatus for forming a reinforcing layer to be used in the pneumatic tire according to the present invention.
FIG. 5 is a perspective view of an extrusion apparatus for forming a reinforcing layer to be used in the pneumatic tire according to the present invention.
FIG. 6 is a side view of a die insert in the extrusion apparatus of FIG. 5.

### Description of Embodiments

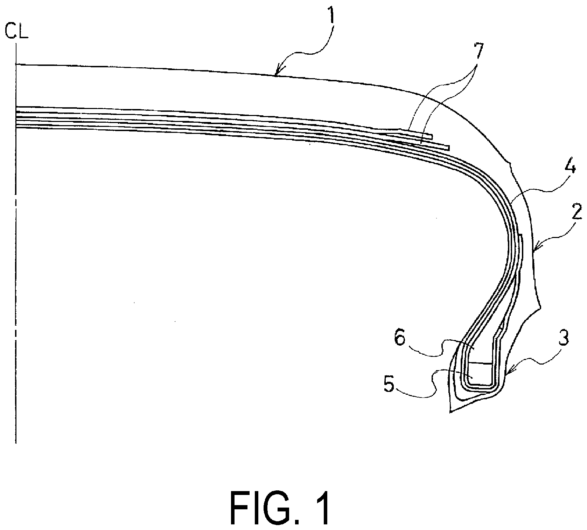

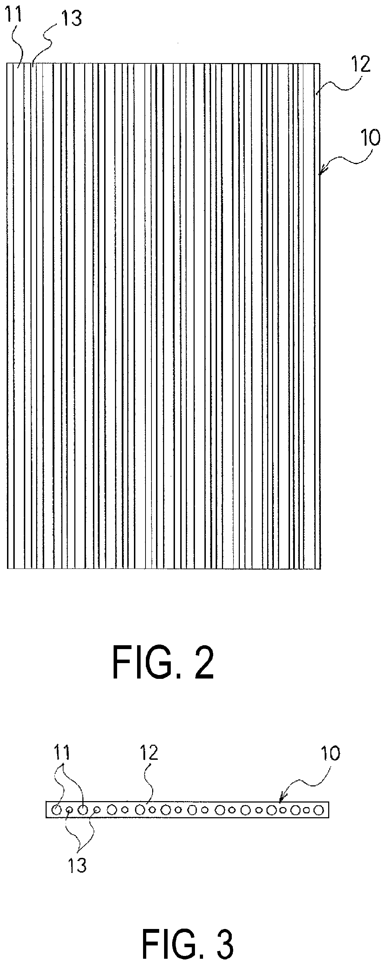

The configuration of the present invention is described in detail below with reference to the accompanying drawings. FIG. 1 illustrates a pneumatic tire according to an embodiment of the present invention, and FIGS. 2 and 3 illustrate a reinforcing layer to be used in the pneumatic tire. FIG. 1 illustrates only a section on one side of a tire centerline CL; the pneumatic tire has a corresponding structure on the other side of the tire centerline CL.

In FIG. 1, 1 is a tread portion, 2 is a sidewall portion, and 3 is a bead portion. Two carcass layers 4 including a plurality of reinforcing cords extending in a tire radial direction are mounted between a pair of left and right bead portions 3, 3. The ends of the carcass layers 4 are folded back around a bead core 5 from the inside of the tire to the outside of the tire. A bead filler 6 formed from a high-hardness rubber composition is disposed at the periphery of the bead core 5, and the bead filler 6 is enveloped by the carcass layers 4.

A plurality of belt layers 7 is embedded on an outer circumferential side of the carcass layers 4 of the tread portion 1. These belt layers 7 contain a plurality of reinforcing cords that are oblique with respect to the tire circumferential direction and disposed in intersecting directions between the various layers.

In the pneumatic tire described above, a reinforcing layer 10 as illustrated in FIGS. 2 and 3 is used in at least one cord-including tire component, as typified by the carcass layers 4 and the belt layers 7. The reinforcing layer 10 includes a plurality of aligned steel cords 11 and coating rubber 12 for covering the steel cords 11. The reinforcing layer 10 further includes a plurality of threads 13 disposed between the steel cords 11 in the coating rubber 12 to extend in the longitudinal direction of the steel cords 11. The steel cords 11 and the threads 13 are alternately disposed in a direction orthogonal to the steel cords 11. While it is desirable that the steel cords 11 and the threads 13 be alternately disposed in this way, the number of threads 13 may be smaller than the number of steel cords 11. In any case, the reinforcing layer 10 includes at least one thread 13.

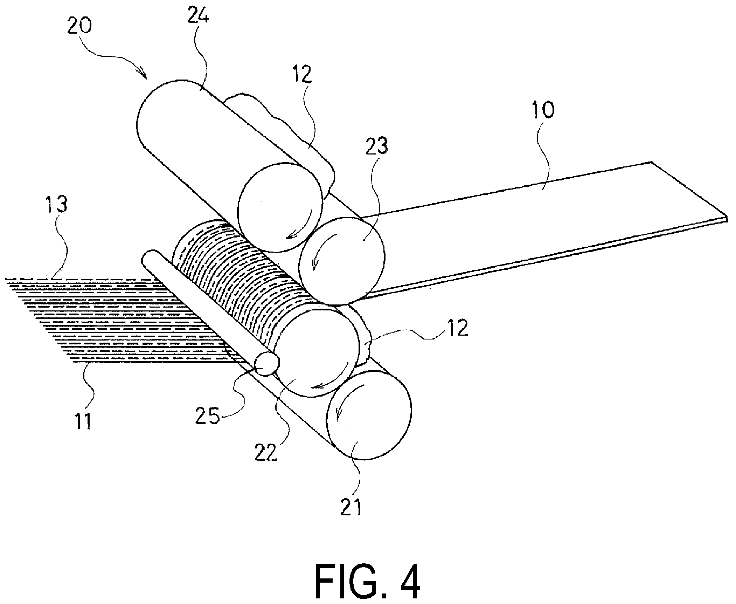

FIG. 4 illustrates a rolling apparatus for forming a reinforcing layer to be used in a pneumatic tire. As illustrated in FIG. 4, a rolling apparatus 20 includes a pair of lower rollers 21 and 22 for supplying unvulcanized coating rubber 12 from below, a pair of upper rollers 23 and 24 for supplying unvulcanized coating rubber 12 from above, and a guide roller 25 for guiding the steel cords 11 and the threads 13. The steel cords 11 and threads 13 are alternately disposed and guided by the guide roller 25 to pass between the lower roller 22 and the upper roller 23. Using the rolling apparatus 20 thus configured, in rolling the plurality of aligned steel cords 11 and the coating rubber 12 between the pair of rollers 22 and 23, the plurality of threads 13 are inserted between the steel cords 11 to extend in the longitudinal direction of the steel cords 11. Accordingly, the reinforcing layer 10 including the steel cords 11 and the threads 13 is formed.

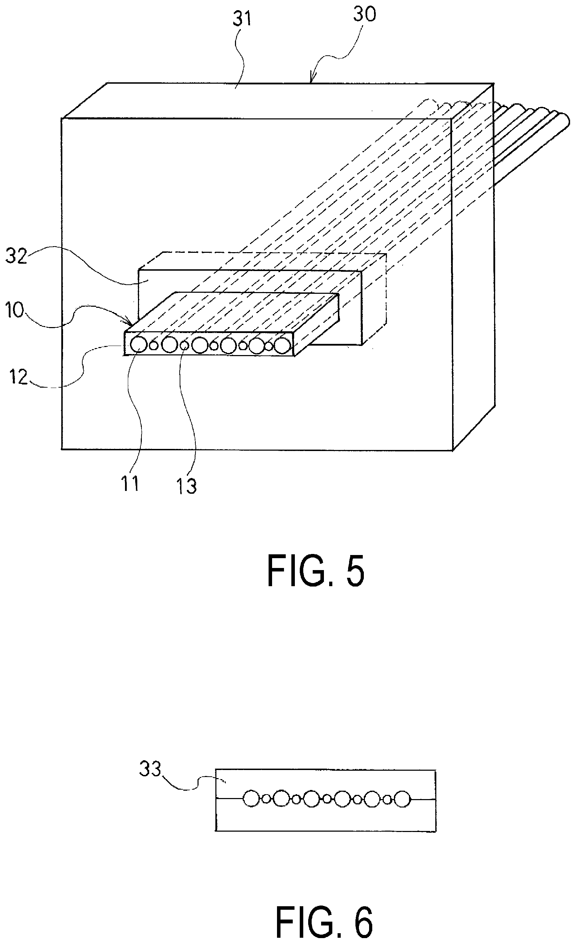

FIG. 5 illustrates an extrusion apparatus for forming a reinforcing layer to be used in a pneumatic tire, and FIG. 6 illustrates a die insert for the extrusion apparatus. As illustrated in FIG. 5, an extrusion apparatus 30 includes an extrusion apparatus body 31 for supplying the unvulcanized coating rubber 12, and a die 32 incorporated into the extrusion apparatus body 31. A plate-shaped die insert 33 as illustrated in FIG. 6 is disposed within the die 32, and the die insert 33 defines the positions of the steel cords 11 and the threads 13. The steel cords 11 and threads 13 are alternately disposed and guided by the die insert 33 to pass through the die 32. Using the extrusion apparatus 30 thus configured, in passing the plurality of aligned steel cords 11 and the coating rubber 12 through the die 32, the plurality of threads 13 are inserted between the steel cords 11 to extend in the longitudinal direction of the steel cords 11. Accordingly, the reinforcing layer 10 including the steel cords 11 and the threads 13 is formed.

After the reinforcing layer 10 including the steel cords 11 and the threads 13 is formed in this way, a green tire using the reinforcing layer 10 as a carcass layer 4 or the belt layer 7 can be formed and vulcanized to obtain the pneumatic tire described above.

To vulcanize the pneumatic tire configured as described above, the unvulcanized tire, having gone through the tire molding process and been molded, is introduced into a mold and heated while pressure is being applied to the inside of the tire by a bladder. During this process, residual moisture and air within the interior of the tire foam at the initial stages of vulcanization, but most of the air pockets produced thereby microdisperse and are eliminated during vulcanization. However, air pockets tend to locally congregate at areas of low pressure during microdispersion. In particular, when the reinforcing layer 10 includes the steel cords 11, residual air in the steel cords 11 can cause enclosed air. In contrast, arranging at least one thread 13 between the steel cords 11 in the coating rubber 12 effectively disperses residual air within the steel cords 11 according to the thread 13. Therefore, the air dispersibility during vulcanization of the reinforcing layer 10 including the steel cords 11 is improved, and the blistering is prevented effectively. Moreover, when disposing the thread 13 between the steel cords 11 in the coating rubber 12, the thread 13 will not be removed or misaligned during the tire forming process, and thus the tire forming process is facilitated.

In the pneumatic tire described above, the tensile strength of the thread 13 may be preferably 100 N or less, and more preferably 1 N to 5 N. As the thread 13 is intended to improve air dispersibility and is not a reinforcing member, limiting the upper limit value of the tensile strength minimizes effects upon the behavior of the reinforcing layer 10. Too great a tensile strength on the part of the thread 13 may have unintended effects upon tire performance.

There is no particular limitation upon the material making up the thread 13; for example, synthetic fibers such as nylon, polyester, and rayon can be used, as can natural fibers such as cotton. The total fineness of the thread 13 should be in a range of 25 dtex to 170 dtex. This reduces tensile strength and ensures good air dispersibility.

While the reinforcing layer 10 used as the carcass layer 4 or the belt layer 7 in the embodiments described above, the reinforcing layer 10 including the steel cords 11 and the threads 13 can be applied to various types of tire components, in the present invention. Examples of such tire components include bead reinforcing layers and side reinforcing layers.

### Examples

A tire according to Example 1 was manufactured by using a reinforcing layer constituted by a plurality of aligned steel cords coated by coating rubber, as a belt layer, in a tire size 225/65R17 pneumatic tire, with a plurality of threads extending in the longitudinal direction of the steel cords being embedded in the coating rubber of the reinforcing layer so that the steel cords and threads were alternately disposed. A thread constituted by cotton fibers having total fineness of 29.5 dtex was used. The tensile strength of the thread was 1 N.

A tire according to Conventional Example 1 was also manufactured, having a structure identical to that of Example 1 except that threads were not disposed in the coating rubber of the reinforcing layer.

Fifty of each of the tires according to Example 1 and Conventional Example 1 were vulcanized. Following vulcanization, the tread portions of the tires were inspected for the presence of blistering, and the blistering occurrence rate was determined. The results indicated that less blistering had occurred in the tires of Example 1 than in Conventional Example 1. The blistering occurrence rate in Example 1 was about 14% of the blistering occurrence rate in Conventional Example 1.

### Reference Signs List

1 Tread portion
2 Sidewall portion
3 Bead portion
4 Carcass layer
5 Bead core
6 Bead filler
7 Belt layer
10 Reinforcing layer
11 Steel cord
12 Coating rubber
13 Thread
20 Rolling apparatus
21 to 41 Roller
30 Extrusion apparatus
31 Extrusion apparatus body
32 Die
33 Die insert

## Claims

1. A pneumatic tire comprising:
a reinforcing layer including a plurality of aligned steel cords coated with coating rubber, wherein
at least one thread for extending in a longitudinal direction of the steel cords is disposed between the plurality of aligned steel cords in the coating rubber.

2. The pneumatic tire according to claim 1, wherein
the thread is constituted by a synthetic fiber or a natural fiber.

3. The method of manufacturing a pneumatic tire according to claim 1 or 2, wherein
the thread has a tensile strength of 100 N or less.

4. A method of manufacturing a pneumatic tire, the method comprising:
inserting at least one thread between a plurality of aligned steel cords to extend in a longitudinal direction of the plurality of aligned steel cords, in rolling the plurality of aligned steel cords along with coating rubber between a pair of rollers, to form a reinforcing layer including the plurality of aligned steel cords and the at least one thread;
then forming a green tire comprising the reinforcing layer; and vulcanizing the green tire.

5. A method of manufacturing a pneumatic tire, the method comprising:
inserting at least one thread between a plurality of aligned steel cords to extend in a longitudinal direction of the plurality of aligned steel cords, in passing the plurality of aligned steel cords along with coating rubber through a die, to form a reinforcing layer including the plurality of aligned steel cords and the at least one thread;
then forming a green tire comprising the reinforcing layer; and
vulcanizing the green tire.

6. The method of manufacturing the pneumatic tire according to claim 4 or 5, wherein
the thread is constituted by a synthetic fiber or a natural fiber.

7. The method of manufacturing the pneumatic tire according to any one of claims 4 to 6, wherein
the thread has a tensile strength of 100 N or less.
